# EUROPÄISCHE PATENTSCHRIFT

(11) **EP 4 133 541 B1**
(45) Veröffentlichungstag und Bekanntmachung des Hinweises auf die Patenterteilung: **03.04.2024**
(21) Anmeldenummer: 21706524.2
(22) Anmeldetag: 16.02.2021
(51) Int. Cl.: H01M 8/0273, H01M 8/0282, H01M 8/0284

(54) **MEMBRANELEKTRODENANORDNUNG UND BRENNSTOFFZELLE, ELEKTROLYSEZELLE, ELEKTROCHEMISCHER WASSERSTOFFKOMPRESSOR, REDOXFLUSSBATTERIE ODER ELEKTROCHEMISCHER SENSOR UMFASSEND DIE MEMBRANELEKTRODENANORDNUNG**
MEMBRANE ELECTRODE ASSEMBLY, AND FUEL CELL, ELECTROLYTIC CELL, ELECTROCHEMICAL HYDROGEN COMPRESSOR, REDOX FLOW BATTERY OR ELECTROCHEMICAL SENSOR COMPRISING THE MEMBRANE ELECTRODE ASSEMBLY
ENSEMBLE MEMBRANE-ÉLECTRODE, ET PILE À COMBUSTIBLE, CELLULE ÉLECTROLYTIQUE, COMPRESSEUR D'HYDROGÈNE ÉLECTROCHIMIQUE, BATTERIE À FLUX REDOX OU CAPTEUR ÉLECTROCHIMIQUE COMPRENANT L'ENSEMBLE MEMBRANE-ÉLECTRODE

(30) Priorität: 07.04.2020 DE 102020204503
(43) Veröffentlichungstag der Anmeldung: 15.02.2023
(73) Patentinhaber: Greenerity GmbH, 63755 Alzenau (DE)
(72) Erfinder: BINDER, Matthias, 63571 Gelnhausen (DE); LEERATANAPHANIT, Sarayut, 63067 Offenbach am Main (DE); GHIELMI, Alessandro, 60322 Frankfurt am Main (DE); SUCHSLAND, Jens-Peter, 63755 Alzenau (DE)
(74) Vertreter: Hoefer & Partner Patentanwälte mbB
(86) Internationale Anmeldenummer: PCT/EP2021/053737
(87) Internationale Veröffentlichungsnummer: WO 2021/204445

(56) Entgegenhaltungen:
- DE-A1-102015 215 496
- DE-A1-102019 202 682
- US-A1- 2006 073 385

## Beschreibung

Die Erfindung betrifft eine Membranelektrodenanordnung mit verbesserter Dichtung sowie eine Brennstoffzelle, eine Elektrolysezelle, einen elektrochemischen Wasserstoffkompressor, eine Redoxflussbatterie oder einen elektrochemischen Sensor mit einer solchen Membranelektrodenanordnung.

Membranelektrodenanordnungen, sogenannte MEAs, umfassen für elektrochemische Anwendungen, wie z.B. zur Anwendung in Brennstoffzellen, in der Wasserelektrolyse und elektrochemischen Sensoren, eine protonenleitfähige Membran, die zwischen einer Anode und einer Kathode angeordnet ist. Um zu verhindern, dass Reaktionsgase ungewollt aus der MEA entweichen oder ungewollt von Anodenseite zur Kathodenseite und umgekehrt gelangen, sowie um die Handhabung der MEA zu erleichtern und Material der Schichten der MEA einzusparen, sind die MEAs üblicherweise von einer rahmenförmigen Dichtung umgeben. Diese rahmenförmige Dichtung kann zudem die Lebensdauer der MEA erhöhen, da sie einen direkten Kontakt einer die MEA flankierenden Gasdiffusionsschicht mit der MEA verhindern kann. EP 2 089 930 A2 beschreibt eine Membranelektrodenanordnung mit einem Dichtungsrahmen, der einen oberen Kunststofffilm und einen unteren Kunststofffilm umfasst, wobei die Kunststofffilme über eine Klebeschicht miteinander verbunden sind. Nachteilig an der in EP 2 089 930 A2 gezeigten, abgedichteten MEA ist, dass der Klebstoff der Klebeschicht unter Betriebsbedingungen der MEA zum Kriechen neigt, so dass es zu einem Fließ- und Setzverhalten der Klebeschicht kommt, was zu einer Ausdünnung der rahmenförmigen Dichtung im Randbereich der MEA führt, wodurch die Dichtungsleistung stark reduziert wird. Da in einem Membranelektrodenstapel mehrere hundert MEAs eingesetzt werden, führt diese Ausdünnung zu einer großen Dimensionsänderung im Membranelektrodenstapel, wodurch Leistungsdichte und Lebensdauer eingeschränkt sein können.

DE 10 2019 202682 A1 lehrt eine mit einem Rahmen ausgestattete Membran-Elektroden-Anordnung, die eine Membran-Elektroden-Anordnung und ein Rahmenelement umfasst. Das Rahmenelement umfasst ein erstes rahmenförmiges Blech und ein zweites rahmenförmiges Blech. Ein innerer Umfangsabschnitt der ersten rahmenförmigen Folie ist mit einem äußeren Umfangsabschnitt der Membran-Elektroden-Anordnung verbunden. Der innere Umfangsabschnitt des ersten rahmenförmigen Blechs ist zwischen einem äußeren Umfangsabschnitt einer Anode und einem äußeren Umfangsabschnitt einer Kathode angeordnet. Zwischen einem inneren Ende des zweiten rahmenförmigen Blechs und einem äußeren Ende der Kathode wird ein Spalt gebildet. Das erste rahmenförmige Blech und das zweite rahmenförmige Blech sind über den gesamten Umfang durch eine Klebeschicht miteinander verbunden.

DE 10 2015 215496 A1 betrifft eine Membran-Elektroden-Einheit für eine Brennstoffzelle, aufweisend eine Membran sowie einen umlaufend an der Membran angeordneten Stützrahmen. Es ist vorgesehen, dass der Stützrahmen eine Folie umfasst, die ausschließlich einseitig auf einer Oberfläche der Membran aufliegt.

In US 2006/073385 A1 werden Mehrzweck-Dichtungsklebstoffe zum Abdichten verschiedener Komponenten einer elektrochemischen Zelle offenbart. Bei den Dichtungsmaterialien handelt es sich um säure-, säureanhydrid-, säureester- oder metallocenmodifizierte Polyolefine, die in einem wärmeaktivierten Dichtungsprozess mehrere Dichtungsfunktionen bereitstellen können. Diese Dichtungspolymere können an glatten und strukturierten Trennplatten aus Metall, Graphit und mit Graphit gefüllten Polymerverbundwerkstoffen haften.

Ausgehend von diesem Stand der Technik ist es eine Aufgabe der vorliegenden Erfindung eine Membranelektrodenanordnung mit einem Dichtungsrahmen bereitzustellen, der sich durch ein besonders geringes Setz-, Kriech- und Fließverhalten unter betriebsüblichem Druck und Temperatur auszeichnet. Zudem ist es eine Aufgabe der Erfindung eine Brennstoffzelle, eine Elektrolysezelle, einen elektrochemischen Wasserstoffkompressor, eine Redoxflussbatterie bzw. einen elektrochemischen Sensor mit einer solchen Membranelektrodenanordnung bereitzustellen, die sich durch eine dauerhaft gute Leistungsdichte und damit sehr hohe Lebensdauer auszeichnen.

Die Lösung dieser Aufgabe erfolgt durch die Merkmale der unabhängigen Ansprüche. Die Unteransprüche haben vorteilhafte Weiterbildungen und Ausführungsformen der Erfindung zum Inhalt.

Demnach wird die Aufgabe durch eine Membranelektrodenanordnung gelöst, die eine Kathode, eine Anode, eine zwischen der Kathode und der Anode angeordnete protonenleitfähige Membran sowie einen spezifisch ausgebildeten Dichtungsrahmen umfasst. Der Dichtungsrahmen ist so ausgebildet, dass er die Kathode, die Anode und die Membran an ihren Rändern umgibt. Dies bedeutet, dass die Kathode, die Anode und die Membran an ihren Außenrändern allseitig von einer rahmenförmigen Dichtung umgeben sind.

Unter einer rahmenförmigen Dichtung bzw. unter einem Dichtungsrahmen wird im Sinne der vorliegenden Erfindung eine Dichtungsstruktur verstanden, die wie ein Bilderrahmen ausgebildet ist und einen freien Innenbereich zwischen den jeweiligen Innenkanten des Dichtungsrahmens aufweist, der wie ein bildartiger oder fensterartiger Ausschnitt geformt ist. In diesem Innenbereich liegen mindestens übereinanderliegende Teilbereiche der Kathode, der Anode und der Membran frei und sind folglich nicht vom Dichtungsrahmen bedeckt. Hierbei kann der Dichtungsrahmen lediglich mit den Kanten der Kathode, der Anode und der Membran an deren jeweiligen Außenumfängen in Verbindung stehen, oder aber die Kathode, die Anode und/oder die Membran in Schichtdickenrichtung der MEA, also in Anordnungsrichtung der Schichten der MEA, teilweise überlappen. Die Schichtdickenrichtung entspricht auch der Stapelrichtung der MEA, also der Anordnungsrichtung der Anode, der Membran und der Kathode.

Der Dichtungsrahmen umfasst in Schichtdickenrichtung eine erste Dichtungsschicht und eine zweite Dichtungsschicht, die über ein Adhäsiv miteinander verbunden sind. Das Adhäsiv steht dabei sowohl mit der ersten Dichtungsschicht als auch mit der zweiten Dichtungsschicht in Kontakt. Zudem weist die erste Dichtungsschicht und/oder die zweite Dichtungsschicht eine Verstärkungsstruktur auf. Die Verstärkungsstruktur kann in Teilbereichen der ersten und/oder zweiten Dichtungsschicht vorhanden sein oder aber verteilt über die gesamte erste und/oder zweite Dichtungsschicht vorliegen. Die Verstärkungsstruktur zeichnet sich durch ein hohes Rückhaltevermögen für das Adhäsiv aus. Vielmehr wird das Adhäsiv durch die Verstärkungsstruktur an einem Kriechen oder Abfließen aus dem Dichtungsrahmen gehindert. Damit wird ein Setzverhalten der MEA unterbunden und die MEA zeichnet sich auch bei bestimmungsgemäßem Gebrauch durch eine hohe Leistungsdichte und daraus folgend, durch eine hohe Lebensdauer aus.

Gemäß einer vorteilhaften Weiterbildung ist die Verstärkungsstruktur in der ersten Dichtungsschicht und/oder in der zweiten Dichtungsschicht ausgebildet. Dies bedeutet, dass die Verstärkungsstruktur nicht als separate Schicht eingesetzt wird, sondern dass die Verstärkungsstruktur direkt in der ersten Dichtungsschicht und/oder in der zweiten Dichtungsschicht geformt und damit integraler Bestandteil der ersten Dichtungsschicht und/oder der zweiten Dichtungsschicht ist. Beispielhaft können entsprechende Verstärkungsstrukturen auf eine Oberfläche einer Dichtungsschicht appliziert oder aufgespritzt sein, z.B. durch Kunststoffspritzguss oder Heißformen. Auch können etwaige Verstärkungsstrukturen extrudiert werden. Alternativ dazu können Verstärkungsstrukturen auch dadurch entstehen, dass Teilbereiche der Dichtungsschicht vertieft werden, so dass sich solche Teilbereiche, die nicht vertieft wurden, durch eine erhöhte Struktur auszeichnen. Eine Vertiefung kann z.B. durch mechanische Behandlung einer Oberfläche einer Dichtungsschicht entstehen, z.B. durch Eindrücken, Stempeln oder Verdichten. Insbesondere können erhöhte Strukturen durch Einpressen einer mit einem Negativ der erhöhten Strukturen ausgestatteten Walze eingearbeitet werden, wobei die Walze insbesondere beheizt ist. Diese Ausführungsform hat den Vorteil, dass es keiner Bereitstellung einer zusätzlichen Schicht für die Verstärkungsstrukturen bedarf und je nach Abmessung der Dichtungsschichten entsprechende Verstärkungsstrukturen direkt in die erste und/oder zweite Dichtungsschicht integriert werden können. Hierbei ist das Vorsehen einer Verstärkungsstruktur in einer Dichtungsschicht ausreichend. Es können aber auch Verstärkungsstrukturen in der ersten und in der zweiten Dichtungsschicht gebildet sein.

Um eine wie vorstehend beschriebene Dichtungsschicht mit integrierter Verstärkungsstruktur zu erhalten, kann gemäß einer weiteren bevorzugten Ausführungsform eine erste Seite der ersten und/oder zweiten Dichtungsschicht, erhöhte Strukturen aufweisen. Unter einer ersten Seite der ersten und/oder zweiten Dichtungsschicht wird dabei diejenige Seite oder Oberfläche der entsprechenden Dichtungsschicht verstanden, die in der MEA in Richtung einer ersten Seite der entsprechenden zweiten oder ersten Dichtungsschicht ausgerichtet ist. Die erhöhten Strukturen haben dabei eine Höhe von mehr als 3 µm, bevorzugt von mehr als 10 µm und besonders bevorzugt von mehr als 15 µm. Die Höhe der erhöhten Strukturen wird dabei ausgehend von der Oberfläche der ersten Seite, auf der die erhöhten Strukturen gebildet sind, bis zum höchsten Punkt der erhöhten Strukturen in Schichtdickenrichtung, also senkrecht zur Umlaufsrichtung des Dichtungsrahmens, gemessen. Durch das Ausbilden der erhöhten Strukturen sind zwischen den erhöhten Strukturen Kavitäten oder mit anderen Worten Vertiefungen gebildet, die das Adhäsiv aufnehmen und am Kriechen oder Auslaufen hindern. Die jeweilige zweite Seite der mit erhöhten Strukturen auf der ersten Seite ausgebildeten ersten und/oder zweiten Dichtungsschicht, ist dabei eben und weist weder erhöhte Strukturen noch Vertiefungen auf. Diese sind nur auf der ersten Seite gebildet.

Weiter vorteilhaft umfassen die erhöhten Strukturen Stege, die insbesondere linear, L-förmig, T-förmig oder kreuzförmig ausgebildet sind. Hierdurch können sehr gut und einfach Rückhaltestrukturen für das Adhäsiv gebildet werden, die an die Dimensionen des Dichtungsrahmens sehr gut angepasst werden können. Die Stege weisen dabei insbesondere eine Breite von 5 µm bis 5 mm, vorzugsweise von 50 µm bis 500 µm, und eine Länge von 10 µm bis 10 mm, vorzugsweise von 100 µm bis 1 mm auf. Unter der Breite eines Stegs wird dabei die kürzeste Seite und unter der Länge des Stegs die längste Seite verstanden, wobei die Länge und die Breite des Stegs senkrecht zur Höhe des Stegs liegen. Durch die vorstehenden Dimensionen wird es besonders leicht möglich, eine gewünschte Menge an Adhäsiv im Dichtungsrahmen zu halten und an einem Kriechen oder Abfließen zu hindern.

Aufgrund eines sehr guten Fassungsvermögens und damit einer sehr hohen Rückhaltekraft für das Adhäsiv, sind zwischen den erhöhten Strukturen liegende Kavitäten vorzugsweise quadratisch, rechteckig, kreisförmig oder hexagonal. Dies bedeutet, dass die erhöhten Strukturen so ausgebildet sind, dass sich zwischen ihnen vertiefte Bereiche oder mit andere Worten Vertiefungen oder Kavitäten ergeben, die quadratisch, rechteckig, kreisförmig oder hexagonal sind. Auch Kombinationen dieser Kavitätsformen sind möglich.

Ferner vorteilhaft im Lichte einer guten Dimensionsstabilisierung des Adhäsivs und damit einer besonders guten Unterbindung des Kriechverhaltens oder Abfließens des Adhäsivs, beträgt ein Volumenanteil von Kavitäten, die zwischen den erhöhten Strukturen vorhanden sind, bezogen auf das Gesamtvolumen der Kavitäten und der erhöhten Strukturen 10 % bis 99 %, vorzugsweise 12 % bis 80 % und weiter bevorzugt 15 % bis 70 %. Je höher der Volumenanteil der Kavitäten ist, desto mehr Adhäsiv kann lokal gebunden werden. Je niedriger der Volumenanteil der Kavitäten ist, also auch je höher der Volumenanteil der erhöhten Strukturen ist, desto stabiler kann die Dichtungsschicht ausgebildet sein. Ein Volumenanteil der Kavitäten von 15 % bis 50 % hat sich im Lichte einer guten Stabilität der Dichtungsschicht bei gleichzeitig sehr hohem Rückhaltevermögen an Adhäsiv als besonders vorteilhaft herausgestellt. Unter dem Begriff "Volumenanteil von Kavitäten" wird dabei die Summe der Volumina von allen in der Dichtungsschicht gebildeten Kavitäten verstanden.

Gemäß einer weiteren vorteilhaften Ausführungsform umfasst die erste Dichtungsschicht und/oder die zweite Dichtungsschicht eine Trägerfolie und eine Verstärkungsstruktur in Form einer Verstärkungsschicht. Dies bedeutet mit anderen Worten, dass die entsprechende Dichtungsschicht (also die erste Dichtungsschicht, die zweite Dichtungsschicht oder beide Dichtungsschichten) mindestens zweischichtig ausgebildet ist und eine Trägerfolie und eine mit der Trägerfolie in Kontakt stehende Verstärkungsschicht aufweist. Die Trägerfolie kann dabei mit der Verstärkungsschicht verbunden sein, z.B. durch Laminieren. Die Verstärkungsschicht kann aber auch auf andere Weise mit der Oberfläche der Trägerfolie in Verbindung stehen, wobei eine solche Verbindung z.B. mittels eines Klebstoffs hergestellt werden kann. Auch ist ein mechanisches Verbinden durch z.B. eine form- und/oder kraftschlüssige Verbindung möglich. Die Verstärkungsschicht ist dabei so auf der Trägerfolie der ersten und/oder zweiten Dichtungsschicht angeordnet, dass sie in Richtung der entsprechenden zweiten oder ersten Dichtungsschicht weist. Diese Ausführungsform hat den Vorteil, dass das Bereitstellen der Verstärkungsstrukturen in Form einer Verstärkungsschicht sehr einfach und kostengünstig ist und die Verstärkungsschicht einfach bevorratet werden kann.

In dieser Ausführungsform umfasst die Verstärkungsstruktur vorzugsweise eine gewebte Struktur und/oder eine poröse Struktur und/oder eine perforierte Struktur. Gewebte Strukturen sind in gewünschter Maschenweite und Ausgestaltung kostengünstig herstellbar. Gewebte Strukturen können durch Polymerfilamente erzeugt werden. Die Polymerfilamente sind dabei durch Fadendurchmesser gekennzeichnet und das Gewebe wird über Schusszahl und Kettenzahl, das Webmuster und die resultierende Gesamtdicke charakterisiert. Die Gesamtdicke kann dabei vor allem an den Kreuzungspunkten von Kette und Schuss durch ein Heissverpressen, sogenanntes Kalandrieren, reduziert werden. Das Kalandrieren sorgt weiterhin für ein Verschmelzen von Kette und Schuss, wodurch die Stabilität des Gewebes erhöht wird und die Verarbeitbarkeit verbessert wird. Poröse Strukturen weisen mehr oder weniger unregelmäßig große Öffnungen auf, sogenannte Poren, die Adhäsiv aufnehmen können. Sie können insbesondere durch axiale oder biaxiale Reckung einer Folie erzeugt werden. Perforierte Strukturen hingegen werden insbesondere durch Perforieren z.B. mittels eines Messers, einer Stanze oder einer Nadel oder unter Verwendung eines Lasers hergestellt. Alle in der Verstärkungsstruktur vorgesehenen Öffnungen (Poren, Perforationen, Gewebedurchgangsöffnungen und dergleichen) haben als Gemeinsamkeit, dass sie die Verstärkungsschicht in Schichtdickenrichtung vollständig durchdringen und somit von einer ersten Seite zu einer zweiten Seite der Verstärkungsschicht führen. Dies ist ein wesentlicher Unterschied zu einer Dichtungsschicht mit erhöhten Strukturen, die immer eine geschlossene Basisschicht aufweist, deren Höhe in Schichtdickenrichtung nicht zur Höhe der erhöhten Strukturen zu zählen ist. In der hier dargelegten Ausführungsform stellt die Trägerfolie die geschlossene Basisschicht dar. Die beschriebenen porösen, gewebten oder perforierten Verstärkungsstrukturen erlauben das Eindringen des Adhäsivs in die Verstärkungsschicht, genauer das Ausfüllen und Imprägnieren der Verstärkungsschicht durch das Adhäsiv des Dichtungsrahmens. Dadurch wird das Adhäsiv räumlich eingegrenzt und das Erweichen des Adhäsivs unter hohem Druck und hoher Temperatur, wie sie in der Anwendung der Membranelektrodenanordnung herrschen, führt nicht zu einem Fließen des Adhäsivs, wodurch ein Setzverhalten und Ausdünnen der MEA im Randbereich effektiv verhindert wird.

Besonders stabile und dabei einfach erhältliche Verstärkungsstrukturen umfassen vorzugsweise Fasern, und hierunter insbesondere Kohlefasern, ein Metallnetz, poröse Keramiken oder Polymere, insbesondere ausgewählt aus der Gruppe von Polyolefinen, Polyestern, aromatischen Polymeren, (per)fluorierten Polymeren, Polysiloxanen oder Mischungen daraus. Verstärkungsstrukturen aus Polymeren können dabei sowohl porös als auch perforiert oder gewebt sein, wobei poröse Polymerstrukturen beispielsweise durch Schäumen des Polymers herstellbar sind. Polymere können ferner als offenmaschige Gewebe vorliegen, wie sie z.B. aus dem Siebdruckbereich bekannt sind, wobei einzelne Polymerfasern einen definierten Garndurchmesser aufweisen. Die Größe der einzelnen Maschenöffnungen oder die Maschenweite sind dabei durch Garndurchmesser und Fadenzahl (d.h. Anzahl Fäden pro Länge) definiert. Dabei kann weiterhin das Webmuster variiert werden, wobei u.a. Leinwandbindung oder Panamabindung üblich sind. Weiterhin kann das Gewebe kalandriert sein, wodurch einerseits durch das Verbinden von Kette und Schuss an den Kreuzungspunkten eine größere Stabilität erreicht wird, da Kette und Schuss nun nicht mehr verrutschen können. Andererseits wird die Gesamtdicke reduziert, indem der runde Garndurchmesser in eine ovale Form gepresst wird. Dies bedingt auch eine Reduzierung der offenen Fläche, also eines Volumenanteils der in der Verstärkungsschicht gebildeten Durchgangslöcher.

Vorteilhaft beträgt ein Volumenanteil von in der Verstärkungsschicht gebildeten Durchgangslöchern, wie z.B. Poren, Perforationen oder Gewebedurchgangslöcher, bezogen auf das Gesamtvolumen der Verstärkungsschicht 10 % bis 99 %, vorzugsweise 12 % bis 80 % und weiter bevorzugt 15% bis 70 % beträgt. Hierbei kann eine Durchgangslochgrößenverteilung mittels DIN 66134:1998-02 - Bestimmung der Porengrößenverteilung und der spezifischen Oberfläche mesoporöser Feststoffe durch Stickstoffsorption - Verfahren nach Barrett, Joyner und Halenda (BJH), ermittelt werden. Das vorstehend genannte Verfahren gilt insbesondere für die Bestimmung des Volumenanteils von Durchgangslöchern poröser Strukturen. Für Perforationen wird der Volumenanteil von Durchgangslöchern direkt über die Geometrie der Perforation berechnet, also aus Perforationsdurchmesser und Anzahl der Perforationen pro Flächenanteil. Für Gewebe ergibt sich der Volumenanteil von Durchgangslöchern ebenfalls rechnerisch aus Garndurchmesser und der Fadenzahl. Damit kann man das Volumen des Fadens berechnen (Fläche des Garnquerschnitts und Länge des Fadens in einer Einheitszelle, wobei die Einheitszelle von Faden zu Faden definiert wird).

Zur Verstärkung der Struktur der MEA ist gemäß einer vorteilhaften Weiterbildung vorgesehen, dass ein Innenbereich der Verstärkungsschicht größer ist als ein Innenbereich der Trägerfolie. Dies bedeutet mit anderen Worten, dass der bildartige oder fensterartige Ausschnitt der Verstärkungsschicht grösser ist als der bildartige oder fensterartige Ausschnitt der Trägerfolie. Der fensterartige Ausschnitt der Verstärkungsschicht kann dabei größer oder gleich der Fläche der Membranelektrodenanordnung sein, so dass Verstärkungsschicht und die Membranelektrodenanordnung keinen Überlappungsbereich aufweisen, oder der fensterartige Ausschnitt der Verstärkungsschicht kann kleiner als die Fläche der Membranelektrodenanordnung sein, so dass Verstärkungsschicht und die Membranelektrodenanordnung einen Überlappungsbereich aufweisen. Ist der fensterartige Ausschnitt der Verstärkungsschicht dabei größer oder gleich der Fläche der Membranelektrodenanordnung, so ist der mechanische Stress der Membranelektrodenanordnung reduziert, da die Gesamtdicke im Überlappungsbereich der Membranelektrodenanordnung und der Trägerfolie weniger dick ist. So kann es im Sinne der Dauerstabilität und Gasdichtigkeit von Vorteil sein, wenn Verstärkungsschicht und Membranelektrodenanordnung keinen Überlappungsbereich aufweisen.

Um dem Dichtungsrahmen eine besonders gute Temperaturstabilität zu verleihen, weist die Verstärkungsstruktur vorteilhafterweise eine Erweichungstemperatur von mehr als 75 °C, vorzugsweise von mehr als 90 °C, weiter bevorzugt von mehr als 105 °C und insbesondere bevorzugt von mehr als 120 °C, und darüber hinaus bevorzugt von mehr als 160 °C auf. Eine entsprechende Erweichungstemperatur kann durch geeignete Materialauswahl im Lichte der gewünschten Temperaturstabilität, die sich insbesondere nach dem bestimmungsgemäßen Gebrauch der MEA richtet, erhalten werden.

Um eine besonders hohe Dichtfunktion und Isolationsfunktion für die Membran bereitzustellen, kann weiter vorteilhaft vorgesehen sein, dass die erste Dichtungsschicht und/oder die zweite Dichtungsschicht mit der Anode und/oder der Kathode und/oder der Membran überlappt und einen Überlappungsbereich bildet. Dies bedeutet z.B., dass der übereinander angeordnete Teilbereich der Anode, Kathode und Membran größer ist als der Innenbereich des Dichtungsrahmens. Die Teilbereiche der Anode, Kathode und Membran sind damit insbesondere zwischen der ersten und zweiten Dichtungsschicht eingespannt, wodurch sich auch eine besonders hohe Stabilität der MEA ergibt.

Aus Gründen der einfachen Produzierbarkeit überlappt der Dichtungsrahmen mit der Anode, der Kathode und der Membran, insbesondere zu gleichen Teilen. Hierdurch wird es möglich, bereits übereinander angeordnete Anordnungen von Anode, Membran und Kathode in einem Schritt so zuzuschneiden, dass sich ein entsprechender Überlappungsbereich mit dem Dichtungsrahmen ergibt.

Gemäß einer weiteren vorteilhaften Weiterbildung ist eine Schichtdicke einer durch das Adhäsiv gebildeten adhäsiven Schicht mindestens so groß wie die Summe der Höhen der erhöhten Strukturen in der ersten und zweiten Dichtungsschicht. Dies bedeutet, dass das Adhäsiv auch lediglich in den zwischen den erhöhten Strukturen vorhandenen Kavitäten oder Vertiefungen vorliegen und bündig mit einer Oberseite der erhöhten Strukturen abschließen kann. In diesem Fall ist die Verstärkungsstruktur mit dem Adhäsiv imprägniert. Sind erhöhte Strukturen lediglich in der ersten Dichtungsschicht vorhanden, dann stehen die Oberseite der erhöhten Strukturen der ersten Dichtungsschicht sowie das Adhäsiv direkt mit der zweiten Dichtungsschicht in Kontakt.

Sind erhöhte Strukturen sowohl in der ersten Dichtungsschicht als auch in der zweiten Dichtungsschicht vorhanden, so ist das Adhäsiv in den jeweiligen Kavitäten oder Vertiefungen der entsprechenden Dichtungsschicht vorhanden und schließt jeweils bündig mit der jeweiligen Oberseite der erhöhten Strukturen in der entsprechenden Dichtungsschicht ab, so dass das in den Kavitäten der ersten Dichtungsschicht vorhandene Adhäsiv sowohl mit der zweiten Dichtungsschicht als auch mit in den Kavitäten der zweiten Dichtungsschicht vorhandenem Adhäsiv in Verbindung steht. Auch steht das in den Kavitäten der zweiten Dichtungsschicht vorhandene Adhäsiv sowohl mit der ersten Dichtungsschicht als auch mit in den Kavitäten der ersten Dichtungsschicht vorhandenem Adhäsiv in Verbindung.

Durch diese Ausführungsform kann ein guter Kontakt zwischen den ersten und zweiten Dichtungsschichten über das Adhäsiv erzeugt werden, so dass auch eine gute Stabilität des Gesamtverbunds erreicht wird.

Alternativ dazu ist vorteilhaft vorgesehen, dass eine Schichtdicke einer durch das Adhäsiv gebildeten adhäsiven Schicht mindestens so groß ist wie die Schichtdicke von in der ersten und zweiten Dichtungsschicht vorliegenden Verstärkungsschichten. Die Schichtdicken werden dabei, wie bereits mehrfach ausgeführt, in Schichtdickenrichtung oder Stapelrichtung der MEA gemessen. Dabei kann die Verstärkungsschicht auch nur in der ersten Dichtungsschicht vorhanden sein oder auch nur in der zweiten Dichtungsschicht oder aber in beiden Dichtungsschichten. Liegt nur in einer Dichtungsschicht eine Verstärkungsschicht vor, so schließt die durch das Adhäsiv gebildete adhäsive Schicht bündig mit einer Oberseite der Verstärkungsschicht ab. Dies gilt beidseitig auch, wenn Verstärkungsschichten in der ersten und in der zweiten Dichtungsschicht vorhanden sind.

In beiden vorstehenden Ausführungsformen ist das Adhäsiv mindestens und vorteilhaft ausschließlich in den Verstärkungsstrukturen vorliegend, so dass das Kriechverhalten und Abfließverhalten maximal unterdrückt werden.

Gemäß einer weiteren vorteilhaften Weiterbildung ist zwischen der ersten Dichtungsschicht und der zweiten Dichtungsschicht eine durch das Adhäsiv gebildete Reinadhäsivschicht vorhanden. Die Reinadhäsivschicht besteht nur aus Adhäsiv und liegt in Schichtdickenrichtung gesehen zwischen der ersten Dichtungsschicht und der zweiten Dichtungsschicht. Die Reinadhäsivschicht umfasst somit keine Verstärkungsstruktur. Um ein Abfließen oder Kriechen besonders gut zu verhindern, beträgt eine Schichtdicke der Reinadhäsivschicht vorzugsweise weniger als 30 µm, insbesondere weniger als 20 µm und insbesondere weniger als 10 µm.

Zur Vereinfachung der Herstellung der erfindungsgemäßen MEA sind die Anode und die Kathode direkt auf die Membran aufgebracht und bilden eine katalysatorbeschichtete Membran (CCM).

Weiter vorteilhaft umfasst die Membranelektrodenanordnung eine erste Gasdiffusionsschicht, die auf einer von der Membran abgewandten Fläche der Anode angeordnet ist und eine zweite Gasdiffusionsschicht, die auf einer von der Membran abgewandten Fläche der Kathode angeordnet ist. Hierbei können auch im Dichtungsrahmen Gasdurchgangsöffnungen vorgesehen sein, die der Zuleitung der Reaktionsgase dienen.

Das Herstellen der erfindungsgemäßen Membranelektrodenanordnung kann auf unterschiedliche Weise realisiert werden, wobei die folgenden, nicht einschränkenden Beispiele gegeben werden:
Erstens kann in einem vorgelagerten Schritt zunächst die Verstärkungsstruktur in Form einer Verstärkungsschicht mit der ersten Dichtungsschicht verbunden werden, wobei die Dichtungsschicht vorzugweise ein Adhäsiv in Form mindestens einer adhäsiven Schicht aufweist. Das Verbinden kann dabei z.B. unter Druck und Temperatur in einem Laminationsschritt erfolgen. Erweicht die adhäsive Schicht durch das Erhitzen, wird durch das Aufbringen von Druck ein Ausfüllen oder Imprägnieren der Verstärkungsstruktur erreicht. Anschließend werden durch Schneiden oder Stanzen in die erste und zweite Dichtungsschicht freiliegende Innenbereiche in Form von fensterartigen Ausschnitten erzeugt. In dieser Prozessführung weisen die ersten und zweiten Dichtungsschichten und die Verstärkungsstruktur die gleiche Dimension auf.

Weiterhin wird eine Membranelektrodenanordnung, die eine Kathode, eine Anode und eine dazwischenliegende Membran umfasst, und die insbesondere als CCM ausgebildet und als Blattware bereitgestellt wird, so in Bezug zur ersten und zweiten Dichtungsschicht in Verbindung gebracht, dass die Membranelektrodenanordnung die fensterartigen Ausschnitte der Dichtungsschichten voll ausfüllt und ein umlaufender Überlappungsbereich zwischen der Membranelektrodenanordnung und den ersten und zweiten Dichtungsschichten erhalten wird. Die Membranelektrodenanordnung, erste und zweite Dichtungsschicht werden durch thermisches Aktivieren oder UV-Behandlung der mindestens einen adhäsiven Schicht verbunden, so dass eine stabile Verbindung mit hoher Gasdichtigkeit erreicht wird. Insbesondere kann das Aktivieren der adhäsiven Schicht unter Druck erfolgen, um eine Ausfüllen oder Imprägnieren der Verstärkungsstruktur zu verbessern.

In einer alternativen zweiten Prozessführung werden in der ersten und zweiten Dichtungsschicht sowie in der Verstärkungsstruktur fensterartige Ausschnitte erzeugt. Dabei kann der fensterartige Ausschnitt der Verstärkungsstruktur größer oder gleich den fensterartigen Ausschnitten der ersten und zweiten Dichtungsschicht sein. In einem nachfolgenden Schritt werden die erste und zweite Dichtungsschicht, die Verstärkungsstruktur und eine wie oben definierte Membranelektrodenanordnung, die ebenfalls vorteilhaft als CCM ausgebildet ist, so zueinander angeordnet, dass die Membranelektrodenanordnung die fensterartigen Ausschnitte der ersten und zweiten Dichtungsschicht voll ausfüllt, so dass zwischen der Membranelektrodenanordnung und der ersten und zweiten Dichtungsschicht ein umlaufender Überlappungsbereich gebildet wird. Der fensterartige Ausschnitt der Verstärkungsstruktur kann dabei größer oder gleich der Fläche der Membranelektrodenanordnung sein, so dass Verstärkungsstruktur und die Membranelektrodenanordnung keinen Überlappungsbereich aufweisen, oder der fensterartige Ausschnitt der Verstärkungsstruktur kann kleiner als die Fläche der Membranelektrodenanordnung sein, so dass Verstärkungsstruktur und die Membranelektrodenanordnung einen Überlappungsbereich aufweisen. Anschließend werden sämtliche Komponenten durch thermisches Aktivieren oder UV-Behandlung der mindestens einen adhäsiven Schicht miteinander verbunden. Insbesondere kann das Aktivieren der adhäsiven Schicht unter Druck erfolgen, um eine Ausfüllen oder Imprägnieren der Verstärkungsstruktur zu verbessern.

Der Vorteil der zweiten Prozessführung besteht in der Flexibilität der Wahl der Größe der fensterartigen Ausschnitte zwischen ersten und zweiten Dichtungsschichten sowie der Verstärkungsstruktur. Weiterhin kann es im Sinne der Dauerstabilität und Gasdichtigkeit von Vorteil sein, wenn Verstärkungsstruktur und Membranelektrodenanordnung keinen Überlappungsbereich aufweisen. Darüber hinaus kann die Verstärkungsstruktur besonders symmetrisch zwischen erster und zweiter Dichtungsschicht angeordnet sein.

In einem abschließenden Schritt können Gasdiffusionsschichten an der mit Dichtungsrahmen versehenen Membranelektrodenanordnung angebracht werden. Die GDL können bspw. durch Verwendung eines thermisch- oder UV-aktivierten Klebers im Randbereich angebracht werden oder durch Laminieren mit der Oberfläche der Membranelektrodenanordnung verbunden werden. GDL auf Anoden- und Kathodenseite können dabei gleich oder unterschiedliche sein.

Ebenfalls erfindungsgemäß wird auch eine Brennstoffzelle, eine Elektrolysezelle, ein elektrochemischer Wasserstoffkompressor, eine Redoxflussbatterie oder ein elektrochemischer Sensor beschrieben, die bzw. der die vorstehend offenbarte Membranelektrodenanordnung umfasst und sich aufgrund dessen durch eine hohe Leistungsdichte und hohe Lebensdauer bei bestimmungsgemäßem Gebrauch auszeichnet.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine Rasterelektronenmikroskopaufnahme eines Dichtungsrahmens einer MEA gemäß einer ersten Ausführungsform im Schnitt;
Fig. 2 eine Schichtanordnung einer MEA gemäß einer zweiten Ausführungsform;
Fig. 3 eine Schichtanordnung einer MEA gemäß einer dritten Ausführungsform;
Fig. 4 eine Schichtanordnung einer MEA gemäß einer vierten Ausführungsform;
Fig. 5 eine schematische Ansicht einer Dichtungsschicht mit erhöhten Strukturen gemäß einer fünften Ausführungsform;
Fig. 6 eine schematische Ansicht einer Dichtungsschicht mit erhöhten Strukturen gemäß einer sechsten Ausführungsform;
Fig. 7 eine schematische Ansicht einer Dichtungsschicht mit erhöhten Strukturen gemäß einer siebten Ausführungsform;
Fig. 8 eine schematische Ansicht einer Dichtungsschicht mit erhöhten Strukturen gemäß einer achten Ausführungsform;
Fig. 9 eine schematische Ansicht einer Dichtungsschicht mit erhöhten Strukturen gemäß einer neunten Ausführungsform und
Fig. 10 das Setzverhalten von Dichtungsrahmen der Beispiele.

In den Figuren sind nur die wesentlichen Merkmale der Erfindung dargestellt. Alle übrigen Merkmale sind der Übersichtlichkeit halber weggelassen. Ferner beziffern gleiche Bezugszeichen gleiche Bauteile/Komponenten.

### Beispiele

Die nachfolgenden Beispiele veranschaulichen die Herstellung von Dichtungsrahmen für Membranelektrodenanordnungen und deren Setzverhalten.

### Beispiel 1

Der gemäß Beispiel 1 hergestellte Dichtungsrahmen umfasste eine erste Dichtungsschicht und eine zweite Dichtungsschicht jeweils versehen mit Adhäsiv in Form einer adhäsiven Schicht mit einer Schichtdicke von je nominell 15 µm. Die im Dichtungsrahmen enthaltene Verstärkungsstruktur bestand aus einer Verstärkungsschicht aus gewebtem Material aus Polyethylenterephthalat (PET) mit einer Schichtdicke von 43 µm und einem Volumenanteil der Durchgangslöcher von 15.1 %. Die Fadenzahl von Kette und Schuss betrug jeweils 180 cm⁻¹ bei einem Fadendurchmesser von 27 µm. Als mit Adhäsiv zu füllender Volumenanteil ergaben sich dadurch 52 %, bezogen auf das Gesamtvolumen des Gewebes, bzw. eine zu füllende Schichtdicke von 22,4 µm.

### Beispiel 2

Der gemäß Beispiel 2 hergestellte Dichtungsrahmen umfasste eine erste Dichtungsschicht und eine zweite Dichtungsschicht mit jeweils einem Adhäsiv in Form einer adhäsiven Schicht von je nominell 15 µm. Die Verstärkungsstruktur bestand aus einer Verstärkungsschicht aus gewebtem Material aus Polyethylenterephthalat (PET) mit einer Schichtdicke von 42 µm und einem Volumenanteil der Durchgangslöcher von 28,6 %. Die Fadenzahl von Kette und Schuss betrug jeweils 150 cm⁻¹ bei einem Fadendurchmesser von 27 µm. Als mit Adhäsiv zu füllender Volumenanteil ergaben sich dadurch 59 % bezogen auf das Gesamtvolumen des Gewebes, bzw. eine zu füllende Schichtdicke von 24,8 µm.

### Beispiel 3

Der gemäß Beispiel 3 hergestellte Dichtungsrahmen umfasste eine erste Dichtungsschicht und eine zweite Dichtungsschicht mit jeweils einem Adhäsiv in Form einer adhäsiven Schicht von je nominell 15 µm. Die Verstärkungsstruktur bestand aus einer Verstärkungsschicht aus gewebtem Material aus Polyetheretherketon (PEEK) mit einer Schichtdicke von 50 µm und einem Volumenanteil der Durchgangslöcher von 58 %. Die Fadenzahl von Kette und Schuss betrug jeweils 73 cm⁻¹ bzw. 52 cm⁻¹ bei einem Fadendurchmesser von 38 µm. Als mit Adhäsiv zu füllender Volumenanteil ergaben sich dadurch 72 % bezogen auf das Gesamtvolumen des Gewebes, bzw. eine zu füllende Schichtdicke von 35,8 µm.

### Vergleichsbeispiel 1

Der gemäß Vergleichsbeispiel 1 hergestellte Dichtungsrahmen war ein Verbund aus erster und zweiter Dichtungsschicht jedoch ohne Verstärkungsstruktur, wobei die erste und zweite Dichtungsschicht jeweils mit einem Adhäsiv in Form einer adhäsiven Schicht von je 15 µm versehen waren.

### Messung des Setzverhaltens

Zur Bestimmung des Setzverhaltens der Dichtungsrahmen aus den Beispielen 1 bis 3 und Vergleichsbeispiel 1 (siehe die nachfolgende Tabelle zu den Einzelheiten) wurden die jeweiligen Verbunde der Schichten der Dichtungsrahmen aus erster und zweiter Dichtungsschicht in eine Apparatur eingebaut, die die Einstellung eines definierten Drucks erlaubt. Der Druck wurde auf 6,67 MPa eingestellt und die Apparatur für eine Dauer von 72 h auf eine Temperatur von 95 °C erhitzt. Die Dicke des Verbunds wurde mittels eines Rasterelektronenmikroskops an einer Stelle, die keinem Druck ausgesetzt war, und einer Stelle, die dem Druck ausgesetzt war, gemessen. Die Differenz der Dicken entsprach dem Setzverhalten.

| Versuch | Verstärkungsmaterial | Garndurchmesser / µm | Fadenzahl Kette/Schuss / cm⁻¹ | Offene Fläche /% | Gesamtdicke / µm | Porosität / % | Zu füllende Dicken nach offener Fläche / µm | Zu füllende Dicke nach Volume n / µm | Material Folie | Material Kleber | Gesamt dicke Kleber / µm |
|---|---|---|---|---|---|---|---|---|---|---|---|
| Beispiel 1 | PET | 27 | 180/180 | 26,4* | 43 | 52,1 | 11,4 | 22,4 | 2 x PEN | Butadienstyrol | 30 |
| Beispiel 2 | PET | 27 | 150/150 | 35,4* | 42 | 59,1 | 14,9 | 24,8 | 2 x PEN | Butadienstyrol | 30 |
| Beispiel 3 | PEEK | 38 | 73/52 | 58* | 50 | 71,6 | 29 | 35,8 | 2 x PEN | Butadienstyrol | 30 |
| Vergleichsbeispiel 1 | n.a. | n.a. | n.a. | n.a. | n.a. | n.a. | n.a. | n.a. | 2 x PEN | Butadienstyrol | 30 |

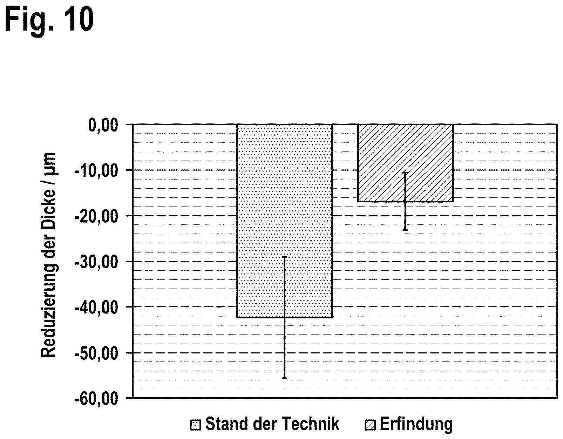

Figur 10 zeigt das Setzverhalten des Dichtungsrahmens aus Vergleichsbeispiel 1 und des Dichtungsrahmens aus Beispiel 1 im Vergleich. Der Vergleich zeigt, dass durch den Einsatz der Verstärkungsstruktur in Beispiel 1 eine deutliche Verringerung des Setzverhaltens erreicht werden konnte.

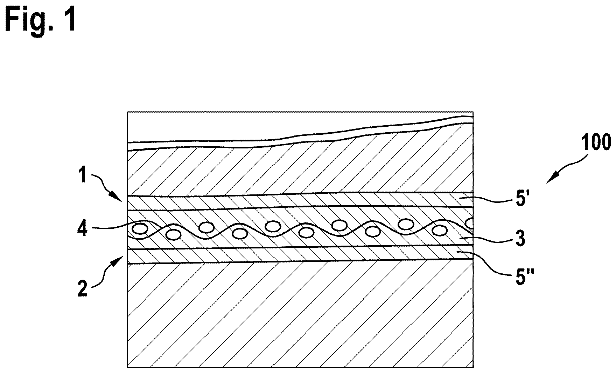

Figur 1 zeigt einen Rasterelektronenmikroskopieausschnitt einer MEA 100 gemäß einer ersten Ausführungsform. Mit Bezugszeichen 1 ist eine erste Dichtungsschicht beziffert und mit Bezugszeichen 2 eine zweite Dichtungsschicht. Die erste und zweite Dichtungsschicht 1, 2 sind über ein Adhäsiv 3 miteinander verbunden. Ferner ist mit Bezugszeichen 4 eine Verstärkungsstruktur beziffert, die in Form eines Gewebes, also in Form einer Verstärkungsschicht, vorliegt und die von dem Adhäsiv 3 umgeben ist. Das Adhäsiv 3 durchdringt die Durchgangslöcher des Gewebes. Bezugszeichen 5` bezeichnet eine erste Trägerfolie der ersten Dichtungsschicht 1 und Bezugszeichen 5" bezeichnet eine zweite Trägerfolie der zweiten Dichtungsschicht 2.

Der Dichtungsrahmen wurde hergestellt, indem zwei Trägerfolien 5' und 5" jeweils mit Adhäsiv 3 in Form einer adhäsiven Schicht beschichtet wurden. Sodann wurde das Gewebe auf die adhäsive Schicht der ersten Trägerfolie 5` aufgelegt, die Trägerfolien 5', 5" mit ihren adhäsiven Schichten zueinander angeordnet und miteinander unter Druck und Temperatur verpresst, so dass ein fester Verbund im Dichtungsrahmen entstand.

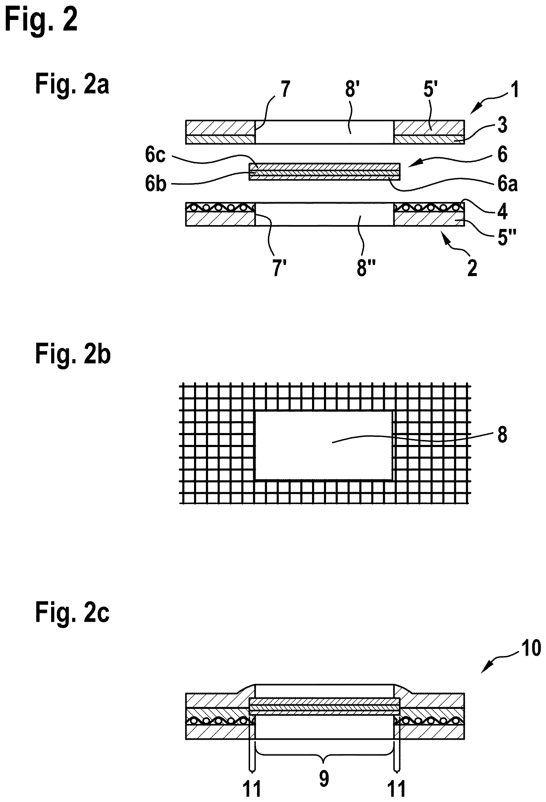

Figur 2 zeigt mit Figuren 2a, 2b und 2c eine Schichtanordnung einer MEA 10 gemäß einer zweiten Ausführungsform. Figur 2a zeigt schematisiert, dass in der Schichtanordnung der MEA 10 die erste Dichtungsschicht 1 eine erste Trägerfolie 5` und ein Adhäsiv 3 in Form einer adhäsiven Schicht umfasst. Die zweite Dichtungsschicht 2 umfasst eine zweite Trägerfolie 5" und eine Verstärkungsstruktur 4, die in Form einer Verstärkungsschicht, und insbesondere in Form eines Gewebes, ausgebildet ist. Die erste Dichtungsschicht 1 und die zweite Dichtungsschicht 2 sind so zueinander angeordnet, dass die Verstärkungsstruktur 4 zur adhäsiven Schicht weist. Eine Draufsicht auf die erste Dichtungsschicht 1 ist im Detail in Figur 2b dargestellt.

In der ersten Dichtungsschicht 1 ist ein fensterartiger oder bildartiger Ausschnitt 7 vorgesehen, der einen freiliegenden Innenbereich 8` der ersten Dichtungsschicht 1 darstellt. Ebenso ist in der zweiten Dichtungsschicht 2 ist ein fensterartiger oder bildartiger Ausschnitt 7` vorgesehen, der einen freiliegenden Innenbereich 8" der zweiten Dichtungsschicht 2 darstellt. Durch die fensterartigen Ausschnitte 7, 7` ergibt sich eine rahmenartige Struktur der ersten und zweiten Dichtungsschicht 1, 2 mit freiliegendem Innenbereich 8 des Dichtungsrahmens.

Bezugszeichen 6 beziffert eine katalysatorbeschichtete Membran 6 (CCM), die eine Membran 6b umfasst, die zwischen einer Anode 6a und einer Kathode 6c angeordnet ist. Die CCM ist so zwischen den ersten und zweiten Dichtungsschichten 1, 2 angeordnet, dass nach einem Verbinden der einzelnen Schichten der Schichtanordnung im Innenbereich 8 des Dichtungsrahmens mindestens übereinanderliegende Teilbereiche 9 der Kathode, der Anode und der Membran freiliegen. Zudem ergibt sich ein die Schichten der MEA10 umlaufender Überlappungsbereich 11, in dem Teilbereiche der CCM 6 mit der ersten und zweiten Dichtungsschicht 1, 2 überlappen.

Die Verstärkungsstruktur 4 ist dazu eingerichtet, Adhäsiv 3 aufzunehmen, das die Verstärkungsstrukturen 4 imprägniert und nach einem Verbinden der Schichten der Schichtanordnung, wie in Figur 2c gezeigt, die erste Dichtungsschicht 1 und die zweite Dichtungsschicht 2 dauerhaft fest zu einem stabilen Dichtungsrahmen verbindet und in denen das Adhäsiv 3 kriechfest, abfließsicher und auslaufsicher gehalten wird.

Figur 2c zeigt die Schichtanordnung aus Figur 2a nach dem Verbinden der Schichten. Die erste und zweite Dichtungsschicht 1, 2 sind über das Adhäsiv 3 miteinander verbunden, wobei das Adhäsiv 3 die Verstärkungsstruktur 4 durchdringt und imprägniert und somit einerseits einen stabilen Dichtungsrahmen erzeugt und andererseits am Kriechen und Abfließen unter Anwendungsbedingungen der Membranelektrodenanordnung 10 gehindert ist.

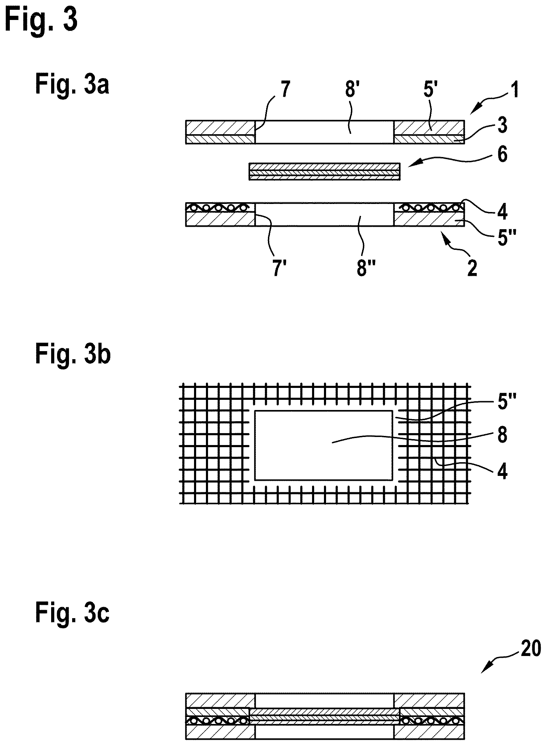

Figuren 3a-c zeigen, wie Figuren 2a-c, eine Schichtanordnung von Schichten zur Herstellung einer Membranelektrodenanordnung 20 (Figur 3a), eine Draufsicht auf die erste Dichtungsschicht 1 (Figur 3b) und eine MEA 20 gemäß einer dritten Ausführungsform, die aus der Schichtanordnung aus Figur 3a erzeugt wurde. Im Unterschied zu den ersten und zweiten Dichtungsschichten 1, 2 auf Figur 2, sind die erste und zweite Dichtungsschicht in Figur 3 derart ausgebildet, dass der fensterartige Ausschnitt der Verstärkungsstruktur 4 größer ist als der fensterartige Ausschnitt des Trägerfolien 5', 5".

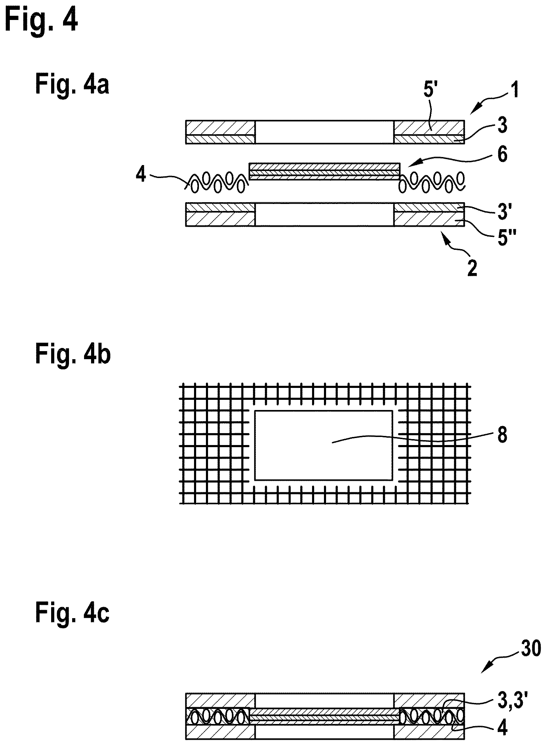

Figuren 4a-c zeigen, wie Figuren 2a-c und 3a-c, eine Schichtanordnung von Schichten zur Herstellung einer Membranelektrodenanordnung 30 (Figur 4a), eine Draufsicht auf die erste Dichtungsschicht 1 (Figur 4b) und eine MEA 30 gemäß einer vierten Ausführungsform (Figur 4c), die aus der Schichtanordnung aus Figur 4a erzeugt wurde. Im Unterschied zu Figuren 2 und 3 sind in der Schichtanordnung in Figur 4a zwei adhäsive Schichten aus Adhäsiv 3 und 3` vorhanden, die entsprechend auf einer ersten Trägerfolie 5` und einer zweiten Trägerfolie 5" angeordnet sind, wobei eine Verstärkungsstruktur 4 zunächst als lose Schicht mit fensterartigem Ausschnitt bereitgestellt und mit der CCM 6 lose verbunden ist. Nach dem Verpressen der Schichten ergibt sich die MEA 30 wie in Figur 4c dargestellt.

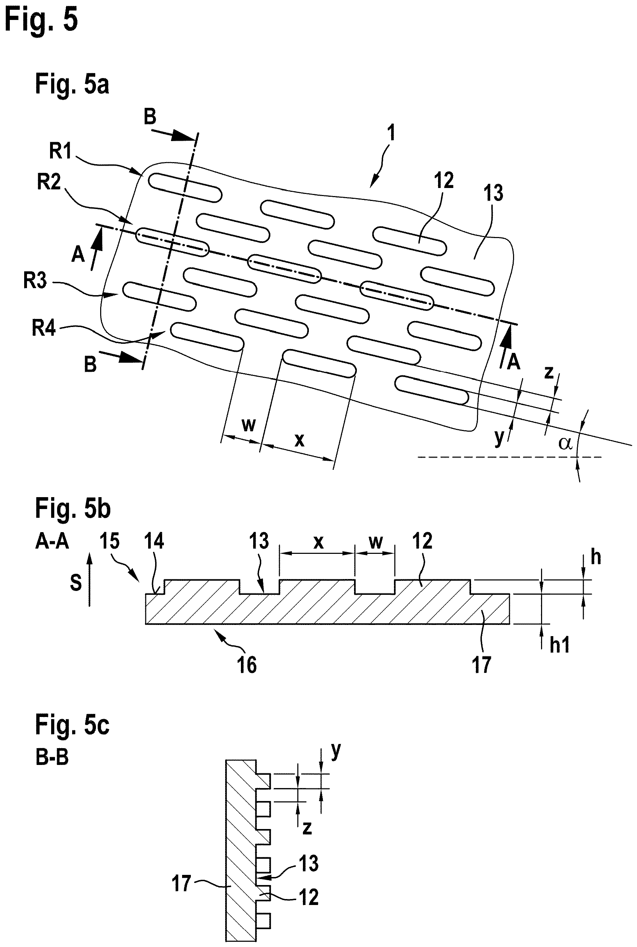

Figur 5 zeigt im Detail eine schematische Ansicht einer exemplarischen ersten Dichtungsschicht 1 mit einer Verstärkungsstruktur 4 in Form von erhöhten Strukturen 12 gemäß einer fünften Ausführungsform, wobei Figur 5a eine Draufsicht, Figur 5b eine Schnittansicht geschnitten bei A:A und Figur 5c eine Schnittansicht geschnitten bei B:B zeigt. Die Verstärkungsstruktur ist in der ersten Dichtungsschicht 1 ausgebildet und damit integraler Bestandteil der ersten Dichtungsschicht 1. Durch die Ausbildung der erhöhten Strukturen 12 haben die umliegenden Bereiche der ersten Dichtungsschicht 1 eine geringere Höhe und stellen somit Kavitäten 13 bzw. Vertiefungen dar.

Die erhöhten Strukturen 12 sind in Form von linearen Stegen ausgebildet und haben eine Höhe h von mehr als 3 µm, bevorzugt von mehr als 10 µm und besonders bevorzugt von mehr als 15 µm. Die Höhe h der erhöhten Strukturen 12 wird dabei (siehe Figur 5b) ausgehend von der Oberfläche 14 der ersten Seite 15 der ersten Dichtungsschicht 1 gemessen, auf der die erhöhten Strukturen 12 gebildet sind, und zwar bis zum höchsten Punkt der erhöhten Strukturen 12 in Schichtdickenrichtung S. Die zweite Seite 16 der ersten Dichtungsschicht 1 weist keine erhöhten Strukturen auf und ist eben ausgebildet. Hierdurch ergibt sich ein planarer Abschnitt der ersten Dichtungsschicht, der als Basisschicht 17 bezeichnet wird und eine Höhe h1 aufweist, die der Dichtungsstruktur eine hohe dimensionale Stabilität verleiht.

Die Stege weisen dabei insbesondere eine Breite y von 5 µm bis 5 mm, vorzugsweise von 50 µm bis 500 µm, und eine Länge x von 10 µm bis 10 mm, vorzugsweise von 100 µm bis 1 mm auf. Unter der Breite eines Stegs wird, wie hier gezeigt, die kürzere Seite und unter der Länge des Stegs die längste Seite verstanden, wobei die Länge und die Breite des Stegs senkrecht zur Höhe des Stegs liegen.

Wie in Figur 5a gezeigt, sind die Stege ihrer Länge x nach hintereinander in parallel zueinander liegenden Reihen R1, R2, R3 und R4 angeordnet, wobei in jeder Reihe R1-R4 die Stege in Längsrichtung hintereinander mit einem jeweiligen Abstand w angeordnet sind. Ein Abstand zwischen zwei nebeneinander liegenden Reihen R1-R4 wird dabei als z bezeichnet. Typische Werte für y und z sind 5 µm bis 5 mm und vorzugsweise 50 µm bis 500 µm. Typische Werte für w und x sind 10 µm bis 10 mm und vorzugsweise 100 µm bis 1 mm.

Durch das Ausbilden der erhöhten Strukturen 12 in Form von Stegen, wie in Figur 5 gezeigt, sind zwischen den erhöhten Strukturen 12 Kavitäten 13 oder mit anderen Worten Vertiefungen gebildet, die Adhäsiv aufnehmen und am Kriechen oder Auslaufen hindern können. Durch Verwendung einer wie hier gezeigten ersten Dichtungsschicht 1 kann einem Ausdünnen des Dichtungsrahmens vorgebeugt und damit eine hohe und dauerhaft gute Stabilität in einer Membranelektrodenanordnung erzielt werden.

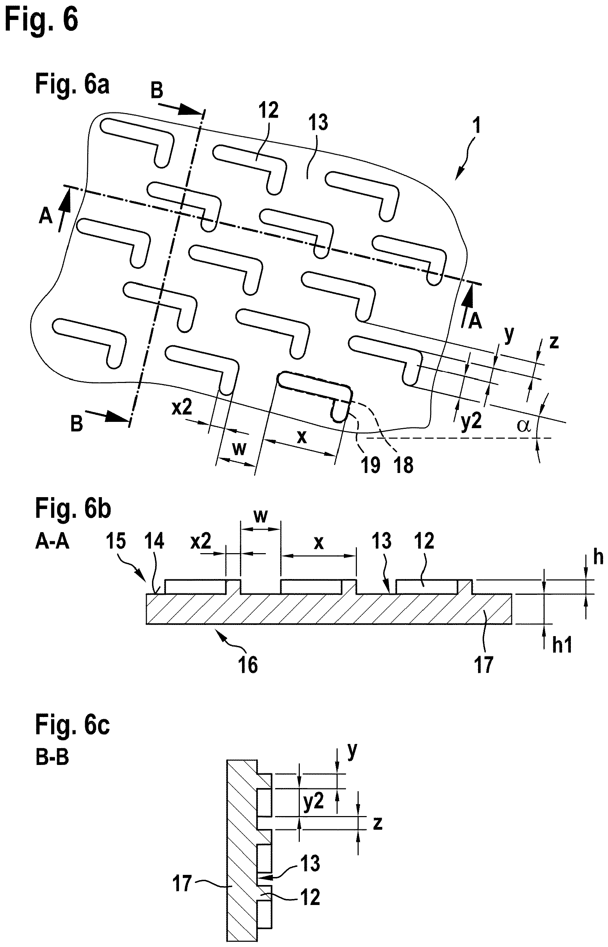

Figur 6 mit Figuren 6a, 6b und 6c zeigt eine schematische Ansicht einer ersten Dichtungsschicht 1 mit erhöhten Strukturen 12 gemäß einer sechsten Ausführungsform.

Im Unterschied zu den erhöhten Strukturen 12 aus Figur 5 sind die erhöhten Strukturen 12 aus Figur 6 L-förmig ausgebildet. Die L-förmige Struktur kann in zwei Teilstrukturen unterteilt werden, eine lineare Teilstruktur 18, wie in Figur 5 gezeigt, und eine senkrecht dazu angeordnete Teilstruktur 19. Die lineare Teilstruktur 18 hat wiederum eine Länge x und eine Breite y. Die senkrecht dazu verlaufende Teilstruktur 19 hat eine Länge y2 und eine Breite x2. Typische Werte für y und z sind 5 µm bis 5 mm und vorzugsweise 50 µm bis 500 µm. Typische Werte für w, x, x2 und y2 sind 10 µm bis 10 mm und vorzugsweise 100 µm bis 1 mm.

Auch durch das Ausbilden der in Figur 6 gezeigten erhöhten Strukturen 12 in Form von L-förmigen Stegen, sind zwischen den erhöhten Strukturen 12 Kavitäten 13 (Vertiefungen) gebildet, die Adhäsiv aufnehmen und am Kriechen oder Auslaufen hindern können. Durch Verwendung einer wie hier gezeigten ersten Dichtungsschicht 1 kann ebenfalls einem Ausdünnen des Dichtungsrahmens vorgebeugt und damit eine hohe und dauerhaft gute Stabilität in einer Membranelektrodenanordnung erzielt werden.

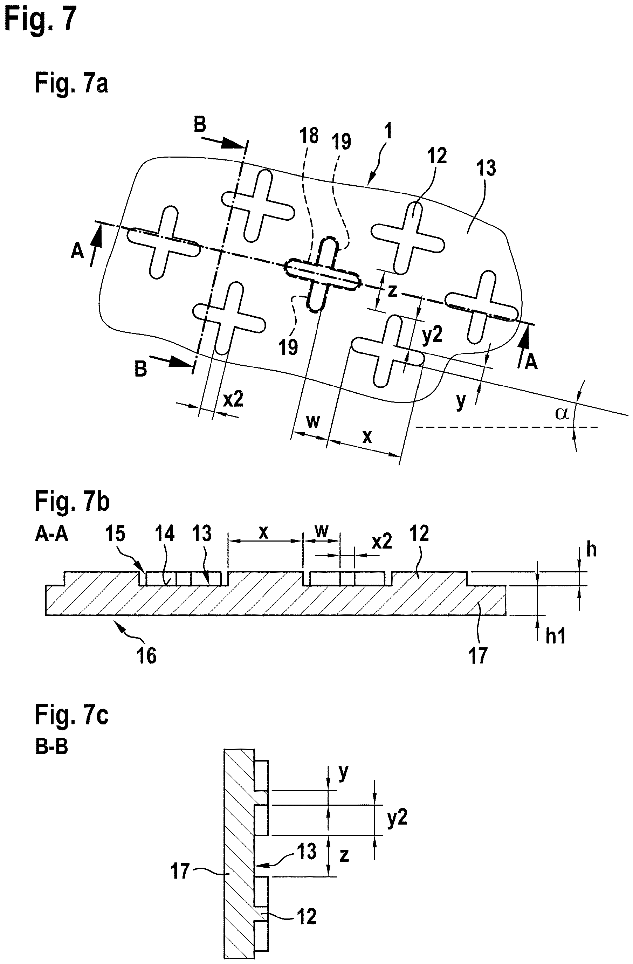

Figur 7 mit Figuren 7a, 7b und 7c zeigt eine schematische Ansicht einer ersten Dichtungsschicht 1 mit erhöhten Strukturen 12 gemäß einer siebten Ausführungsform.

Im Unterschied zu den erhöhten Strukturen 12 aus Figur 5 sind die erhöhten Strukturen 12 aus Figur 7 kreuzförmig ausgebildet. Die Kreuze sind regelmäßig ausgebildet und können in Teilstrukturen unterteilt werden, eine lineare Teilstruktur 18, wie in Figur 5 gezeigt, und zwei senkrecht dazu angeordnete Teilstrukturen 19, die gleich ausgebildet sind. Die lineare Teilstruktur 18 hat wiederum eine Länge x und eine Breite y. Die senkrecht dazu verlaufenden Teilstrukturen 19 haben eine Länge y2 und eine Breite x2. Typische Werte für y und z sind 5 µm bis 5 mm und vorzugsweise 50 µm bis 500 µm. Typische Werte für w, x, x2 und y2 sind 10 µm bis 10 mm und vorzugsweise 100 µm bis 1 mm.

Auch durch das Ausbilden der in Figur 7 gezeigten erhöhten Strukturen 12 in Form von kreuzförmigen Stegen, sind zwischen den erhöhten Strukturen 12 Kavitäten 13 (Vertiefungen) gebildet, die Adhäsiv aufnehmen und am Kriechen oder Auslaufen hindern können. Durch Verwendung einer wie hier gezeigten ersten Dichtungsschicht 1 kann ebenfalls einem Ausdünnen des Dichtungsrahmens vorgebeugt und damit eine hohe und dauerhaft gute Stabilität in einer Membranelektrodenanordnung erzielt werden.

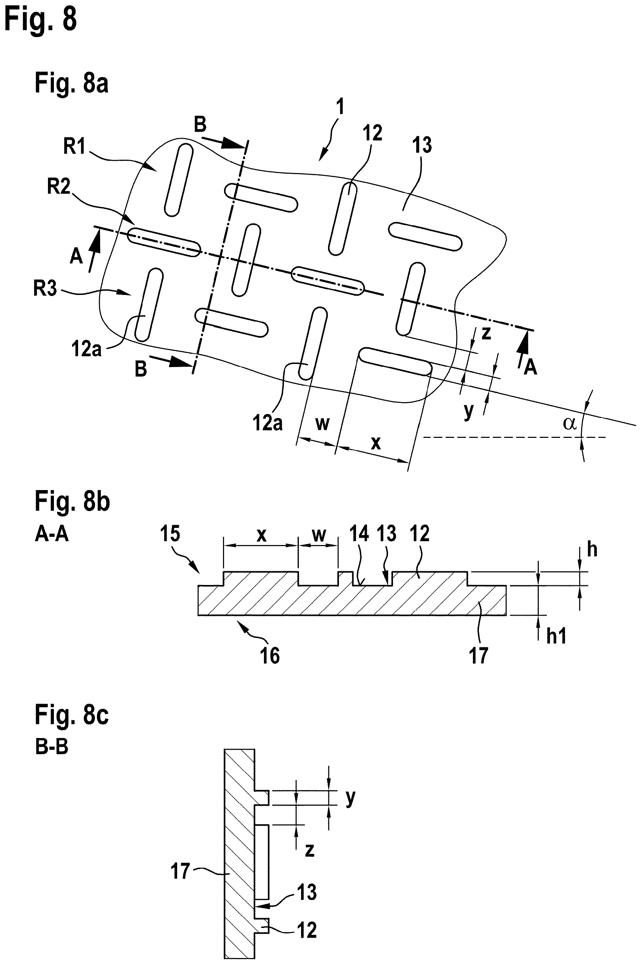

Figur 8 zeigt im Detail eine schematische Ansicht eine erste Dichtungsschicht 1 mit erhöhten Strukturen 12 gemäß einer achten Ausführungsform. Wie die erhöhten Strukturen 12 aus Figur 5 sind die erhöhten Strukturen 12 aus Figur 8 ebenfalls als linear Stege ausgebildet und in Reihen R1, R2 und R3 angeordnet, nur dass in jeder Reihe R1-R3 jede zweite lineare erhöhte Struktur 12a, also jeder zweite Steg, senkrecht zu der vorhergehenden und zu der nachfolgenden linearen erhöhten Struktur 12 angeordnet ist. Die jeweiligen Mitten der senkrecht angeordneten linearen erhöhten Strukturen 12a befinden sich dabei auf der Längsachse der in der Reihe nacheinander linear angeordneten erhöhten Strukturen 12.

Die Stege sind in Länge und Breite insbesondere gleich ausgebildet und weisen dabei insbesondere eine Breite y von 5 µm bis 5 mm, vorzugsweise von 50 µm bis 500 µm, und eine Länge x von 10 µm bis 10 mm, vorzugsweise von 100 µm bis 1 mm auf. Die Stege sind in Längsrichtung der linearen erhöhten Strukturen 12 in den Reihen R1-3 hintereinander mit einem jeweiligen Abstand w angeordnet. Ein Abstand zwischen zwei nebeneinander liegenden Reihen R1-R3 wird dabei als z bezeichnet. Typische Werte für y und z sind 5 µm bis 5 mm und vorzugsweise 50 µm bis 500 µm. Typische Werte für w und x sind 10 µm bis 10 mm und vorzugsweise 100 µm bis 1 mm.

Auch durch das Ausbilden der in Figur 8 gezeigten erhöhten Strukturen 12 in Form von senkrecht zueinander angeordneten linearen Stegen, sind zwischen den erhöhten Strukturen 12 Kavitäten 13 (Vertiefungen) gebildet, die Adhäsiv aufnehmen und am Kriechen oder Auslaufen hindern können. Durch Verwendung einer wie hier gezeigten ersten Dichtungsschicht 1 kann ebenfalls einem Ausdünnen des Dichtungsrahmens vorgebeugt und damit eine hohe und dauerhaft gute Stabilität in einer Membranelektrodenanordnung erzielt werden.

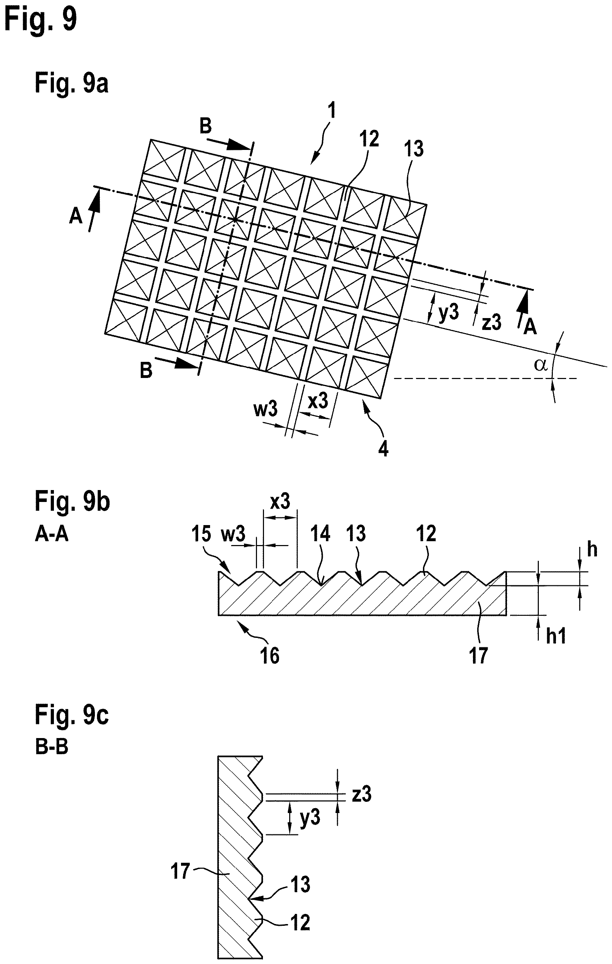

Figur 9 mit Figuren 9a, 9b und 9c zeigt eine schematische Ansicht einer ersten Dichtungsschicht 1 mit erhöhten Strukturen 12 gemäß einer neunten Ausführungsform. Im Unterschied zu den vorhergehenden ersten Dichtungsschichten 1, ist die in Figur 9 gezeigte erste Dichtungsschicht 1 so ausgebildet, dass die Verstärkungsstrukturen in Form von miteinander verbundenen Rechtecken geformt sind, wobei die im Innenbereich der Rechtecke liegenden Kavitäten 13 eine invertierte pyramidenförmige Struktur aufweisen. Jedes Rechteck weist eine Länge x3 und eine Breite y3, jeweils an den Innenkanten der Rechtecke gemessen, auf, die durch die erhöhten Strukturen 12 gebildet werden. Hierbei ist w3 die jeweilige Breite der erhöhten Strukturen 12 zwischen zwei in Längsrichtung aneinandergrenzenden Rechtecken und z3 die jeweilige Breite der erhöhten Strukturen 12 zwischen zwei in Querrichtung aneinandergrenzenden Rechtecken.

Auch durch das Ausbilden der in Figur 9 gezeigten erhöhten Strukturen 12 in Form von Rechtecken, woraus sich eine "geschlossene" Verstärkungsstruktur 4 ergibt, die an ihren Außenrändern erhöhte Strukturen 12 aufweist, wobei im Innenraum der jeweiligen Rechtecke Kavitäten 13 (Vertiefungen) gebildet sind, kann Adhäsiv in die Verstärkungsstruktur 4 aufgenommen und somit am Kriechen oder Auslaufen gehindert werden. Durch Verwendung einer wie hier gezeigten ersten Dichtungsschicht 1 kann ebenfalls einem Ausdünnen des Dichtungsrahmens vorgebeugt und damit eine hohe und dauerhaft gute Stabilität in einer Membranelektrodenanordnung erzielt werden.

Neben der vorstehenden schriftlichen Beschreibung der Erfindung wird zu deren ergänzender Offenbarung hiermit explizit auf die zeichnerische Darstellung der Erfindung in den Fig. 1 bis 9 Bezug genommen.

### Bezugszeichenliste

- 1: erste Dichtungsschicht
- 2: zweite Dichtungsschicht
- 3: Adhäsiv
- 4: Verstärkungsstruktur
- 5`: erste Trägerfolie der ersten Dichtungsschicht
- 5": zweite Trägerfolie der zweiten Dichtungsschicht
- 6: CCM
- 6a: Anode
- 6b: Membran
- 6c: Kathode
- 7: fensterartiger Ausschnitt
- 8: Innenbereich des Dichtungsrahmens
- 8`: Innenbereich der ersten Dichtungsschicht
- 8": Innenbereich der zweiten Dichtungsschicht
- 9: freiliegender Teilbereich der übereinander angeordneten Anode, Kathode und Membran
- 10, 20, 30, 100: MEA
- 11: Überlappungsbereich
- 12: erhöhte Struktur
- 12a: zweite lineare erhöhte Struktur
- 13: Kavität
- 14: Oberfläche der ersten Seite einer Dichtungsschicht
- 15: erste Seite einer Dichtungsschicht
- 16: zweite Seite einer Dichtungsschicht
- 17: Basisschicht
- 18: lineare Teilstruktur
- 19: senkrechte Teilstruktur
- h: Höhe der erhöhten Struktur
- h1: Höhe der Basisschicht
- x: Länge eines Stegs
- y: Breite eines Stegs
- x2: Breite der senkrecht verlaufenden Teilstrukturen eines L-förmigen Stegs
- y2: Länge der senkrecht verlaufenden Teilstrukturen eines L-förmigen Stegs
- w: Abstand von Stegen in Längsrichtung der Stege
- x3: Breite einer erhöhten Struktur
- y3: Breite von aneinandergrenzenden Rechtecken
- w3: Breite der erhöhten Strukturen 12 entlang der Länge x3 von aneinandergrenzenden Rechtecken
- S: Schichtdickenrichtung

## Patentansprüche

1. Membranelektrodenanordnung (10, 20, 30) umfassend:
- eine Kathode (6c),
- eine Anode (6a),
- eine zwischen der Kathode (6c) und der Anode (6a) angeordnete protonenleitfähige Membran (6b) und
- einen Dichtungsrahmen, der die Kathode (6c), die Anode (6a) und die Membran (6b) an ihren Rändern umgibt, wobei im Innenbereich (8) des Dichtungsrahmens mindestens übereinanderliegende Teilbereiche (9) der Kathode (6c), der Anode (6a) und der Membran (6b) freiliegen, wobei der Dichtungsrahmen in Schichtdickenrichtung (S) eine erste Dichtungsschicht (1) und eine zweite Dichtungsschicht (2) umfasst, die über ein Adhäsiv (3) miteinander verbunden sind und wobei die erste Dichtungsschicht (1) und/oder die zweite Dichtungsschicht (2) eine Verstärkungsstruktur (4) aufweist.

2. Membranelektrodenanordnung (10, 20, 30) nach Anspruch 1, wobei die Verstärkungsstruktur (4) in der ersten Dichtungsschicht (1) und/oder in der zweiten Dichtungsschicht (2) ausgebildet ist.

3. Membranelektrodenanordnung (10, 20, 30) nach Anspruch 2, wobei zum Erhalt der Verstärkungsstruktur (4) eine erste Seite (15) der ersten und/oder zweiten Dichtungsschicht (1, 2), die in Richtung einer ersten Seite (16) der entsprechenden zweiten oder ersten Dichtungsschicht (2, 1) ausgerichtet ist, erhöhte Strukturen (12) aufweist, die eine Höhe (h) von mehr als 3 µm, bevorzugt von mehr als 10 µm und besonders bevorzugt von mehr als 15 µm aufweisen, wobei die erhöhten Strukturen (12) insbesondere Stege umfassen, die insbesondere linear, L-förmig, T-förmig oder kreuzförmig ausgebildet sind, und wobei die Stege insbesondere eine Breite (y) von 5 µm bis 5 mm, vorzugsweise von 50 µm bis 500 µm, und eine Länge (x) von 10 µm bis 10 mm, vorzugsweise von 100 µm bis 1 mm aufweisen,
wobei insbesondere zwischen den erhöhten Strukturen (12) liegende Kavitäten (13) quadratisch, rechteckig, kreisförmig oder hexagonal sind.

4. Membranelektrodenanordnung (10, 20, 30) nach Anspruch 2 oder 3, wobei ein Volumenanteil von Kavitäten (13), die zwischen den erhöhten Strukturen (12) vorhanden sind, bezogen auf das Gesamtvolumen der Kavitäten (13) und der erhöhten Strukturen (12) 10 % bis 99 %, vorzugsweise 12 % bis 80 % und weiter bevorzugt 15 % bis 70 % beträgt.

5. Membranelektrodenanordnung (10, 20, 30) nach Anspruch 1, wobei die erste Dichtungsschicht (1) und/oder die zweite Dichtungsschicht (2) eine Trägerfolie (5', 5") und eine Verstärkungsstruktur (4) in Form einer Verstärkungsschicht umfasst.

6. Membranelektrodenanordnung (10, 20, 30) nach Anspruch 5, wobei die Verstärkungsstruktur (4) eine gewebte Struktur und/oder eine poröse Struktur und/oder eine perforierte Struktur umfasst, wobei die Verstärkungsstruktur (4) insbesondere Fasern, insbesondere Kohlefasern, ein Metallnetz, poröse Keramiken oder Polymere, insbesondere ausgewählt aus der Gruppe von Polyolefinen, Polyestern, aromatischen Polymeren, (per)fluorierten Polymeren, Polysiloxanen oder Mischungen daraus umfasst.

7. Membranelektrodenanordnung (10, 20, 30) nach Anspruch 5 oder 6, wobei ein Volumenanteil von in der Verstärkungsschicht (4) gebildeten Durchgangslöchern, bezogen auf das Gesamtvolumen der Verstärkungsschicht (4) 10 % bis 99 %, vorzugsweise 12 % bis 80 % und weiter bevorzugt 15 % bis 70 % beträgt und/oder
wobei ein Innenbereich der Verstärkungsschicht (4) größer ist als ein Innenbereich der Trägerfolie (5).

8. Membranelektrodenanordnung (10, 20, 30) nach einem der vorhergehenden Ansprüche, wobei die Verstärkungsstruktur (4) eine Erweichungstemperatur von mehr als 75 °C, vorzugsweise von mehr als 90 °C, weiter bevorzugt von mehr als 105 °C, insbesondere bevorzugt von mehr als 120 °C und besonders bevorzugt von mehr als 160 °C aufweist, und/oder
wobei die erste Dichtungsschicht (1) und/oder die zweite Dichtungsschicht (2) mit der Anode (6a) und/oder der Kathode (6c) und/oder der Membran (6b) überlappt und einen Überlappungsbereich (11) bildet, wobei der Dichtungsrahmen insbesondere mit der Anode (6a), der Kathode (6c) und der Membran (6b), insbesondere zu gleichen Teilen, überlappt.

9. Membranelektrodenanordnung (10, 20, 30) nach einem der Ansprüche 3 bis 8, wobei eine Schichtdicke einer durch das Adhäsiv (3) gebildeten adhäsiven Schicht mindestens so groß ist wie die Summe der Höhen (h) der erhöhten Strukturen (12) in der ersten und zweiten Dichtungsschicht (1, 2) oder mindestens so groß ist wie die Schichtdicke von in der ersten und zweiten Dichtungsschicht (1, 2) vorliegenden Verstärkungsschicht (4).

10. Membranelektrodenanordnung (10, 20, 30) nach einem der vorhergehenden Ansprüche, wobei zwischen der ersten Dichtungsschicht (1) und der zweiten Dichtungsschicht (2) eine durch das Adhäsiv (3) gebildete Reinadhäsivschicht vorhanden ist und die Reinadhäsivschicht eine Schichtdicke von weniger als 30 µm, insbesondere von weniger als 20 µm und insbesondere von weniger als 10 µm aufweist und/oder
wobei die Anode (6a) und die Kathode (6c) direkt auf die Membran (6b) aufgebracht sind und eine katalysatorbeschichtete Membran bilden und/oder
ferner umfassend eine erste Gasdiffusionsschicht, die auf einer von der Membran (6b) abgewandten Fläche der Anode (6a) angeordnet ist und eine zweite Gasdiffusionsschicht, die auf einer von der Membran (6b) abgewandten Fläche der Kathode (6c) angeordnet ist.

11. Brennstoffzelle, Elektrolysezelle, elektrochemischer Wasserstoffkompressor, Redoxflussbatterie oder elektrochemischer Sensor umfassend eine Membranelektrodenanordnung (10, 20, 30) nach einem der vorhergehenden Ansprüche.

## Claims

1. A membrane electrode assembly (10, 20, 30), comprising:
- a cathode (6c),
- an anode (6a),
- a proton-conductive membrane (6b) arranged between the cathode (6c) and the anode (6a) and
- a sealing frame which surrounds the cathode (6c), the anode (6a) and the membrane (6b) at the edges thereof, wherein in the inner region (8) of the sealing frame at least mutually superposed subregions (9) of the cathode (6c), of the anode (6a) and of the membrane (6b) are exposed, wherein the sealing frame, in the layer thickness direction (S), comprises a first sealing layer (1) and a second sealing layer (2) which are bonded to each other by an adhesive (3) and wherein the first sealing layer (1) and/or the second sealing layer (2) has a reinforcement structure (4).

2. The membrane electrode assembly (10, 20, 30) as claimed in claim 1, wherein the reinforcement structure (4) is formed in the first sealing layer (1) and/or in the second sealing layer (2).

3. The membrane electrode assembly (10, 20, 30) as claimed in claim 2, wherein, to obtain the reinforcement structure (4), a first side (15) of the first and/or second sealing layer (1, 2), which is oriented in the direction of a first side (16) of the corresponding second or first sealing layer (2, 1), has raised structures (12) having a height (h) of more than 3 µm, preferably of more than 10 µm and particularly preferably of more than 15 µm, wherein the raised structures (12) in particular comprise ridges that are in particular of L-shaped, T-shaped or cross-shaped form, and wherein the ridges in particular have a width (y) of 5 µm to 5 mm, preferably of 50 µm to 500 µm, and a length (x) of 10 µm to 10 mm, preferably of 100 µm to 1 mm,
wherein in particular cavities (13) lying between the raised structures (12) are square, rectangular, circular or hexagonal.

4. The membrane electrode assembly (10, 20, 30) as claimed in claim 2 or 3, wherein a proportion by volume of cavities (13) present between the raised structures (12), based on the total volume of cavities (13) and of raised structures (12), is 10% to 99%, preferably 12% to 80% and more preferably 15% to 70%.

5. The membrane electrode assembly (10, 20, 30) as claimed in claim 1, wherein the first sealing layer (1) and/or the second sealing layer (2) comprises a carrier film (5', 5") and a reinforcement structure (4) in the form of a reinforcement layer.

6. The membrane electrode assembly (10, 20, 30) as claimed in claim 5, wherein the reinforcement structure (4) comprises a woven structure and/or a porous structure and/or a perforated structure, wherein the reinforcement structure (4) in particular comprises fibers, especially carbon fibers, a metal mesh, porous ceramics or polymers, in particular selected from the group of polyolefins, polyesters, aromatic polymers, (per)fluorinated polymers, polysiloxanes or mixtures thereof.

7. The membrane electrode assembly (10, 20, 30) as claimed in claim 5 or 6, wherein a proportion by volume of through-holes formed in the reinforcement layer (4), based on the total volume of the reinforcement layer (4), is 10% to 99%, preferably 12% to 80% and more preferably 15% to 70%, and/or
wherein an inner region of the reinforcement layer (4) is larger than an inner region of the carrier film (5).

8. The membrane electrode assembly (10, 20, 30) as claimed in any of the preceding claims, wherein the reinforcement structure (4) has a softening temperature of more than 75°C, preferably of more than 90°C, more preferably of more than 105°C, particularly preferably of more than 120°C and especially preferably of more than 160°C, and/or
wherein the first sealing layer (1) and/or the second sealing layer (2) overlaps the anode (6a) and/or the cathode (6c) and/or the membrane (6b) and forms an overlap region (11), wherein the sealing frame overlaps in particular the anode (6a), the cathode (6c) and the membrane (6b), in particular in equal parts.

9. The membrane electrode assembly (10, 20, 30) as claimed in any of claims 3 to 8, wherein a layer thickness of an adhesive layer formed by the adhesive (3) is at least as great as the sum total of the heights (h) of the raised structures (12) in the first and second sealing layers (1, 2) or at least as great as the layer thickness of reinforcement layer (4) present in the first and second sealing layers (1, 2).

10. The membrane electrode assembly (10, 20, 30) as claimed in any of the preceding claims, wherein a pure adhesive layer formed by the adhesive (3) is present between the first sealing layer (1) and the second sealing layer (2) and the pure adhesive layer has a layer thickness of less than 30 µm, in particular of less than 20 µm and in particular of less than 10 µm, and/or
wherein the anode (6a) and the cathode (6c) are applied directly to the membrane (6b) and form a catalyst-coated membrane and/or
further comprising a first gas diffusion layer which is arranged on a face of the anode (6a) that faces away from the membrane (6b) and a second gas diffusion layer which is arranged on a face of the cathode (6c) that faces away from the membrane (6b).

11. A fuel cell, electrolytic cell, electrochemical hydrogen compressor, redox flow battery or electrochemical sensor comprising a membrane electrode assembly (10, 20, 30) as claimed in any of the preceding claims.

## Revendications

1. Ensemble membrane-électrode (10, 20, 30), comprenant :
- une cathode (6c),
- une anode (6a),
- une membrane (6b) conductrice de protons disposée entre la cathode (6c) et l'anode (6a), et
- un cadre d'étanchéité, qui entoure la cathode (6c), l'anode (6a) et la membrane (6b) sur leurs bords, dans lequel au moins des zones partielles (9) superposées de la cathode (6c), de l'anode (6a) et de la membrane (6b) sont exposées dans la zone intérieure (8) du cadre d'étanchéité, dans lequel le cadre d'étanchéité comprend dans la direction d'épaisseur de couche (S) une première couche d'étanchéité (1) et une seconde couche d'étanchéité (2), qui sont reliées l'une à l'autre par l'intermédiaire d'un adhésif (3) et dans lequel la première couche d'étanchéité (1) et/ou la seconde couche d'étanchéité (2) présentent une structure de renforcement (4).

2. Ensemble membrane-électrode (10, 20, 30) selon la revendication 1, dans lequel la structure de renforcement (4) est réalisée dans la première couche d'étanchéité (1) et/ou dans la seconde couche d'étanchéité (2).

3. Ensemble membrane-électrode (10, 20, 30) selon la revendication 2, dans lequel un premier côté (15) de la première et/ou de la seconde couche d'étanchéité (1, 2), qui est orienté en direction d'un premier côté (16) de la deuxième ou première couche d'étanchéité (2, 1) correspondante, présente, pour obtenir la structure de renforcement (4), des structures rehaussées (12), qui présentent une hauteur (h) supérieure à 3 µm, de manière préférée supérieure à 10 µm et de manière particulièrement préférée supérieure à 15 µm, dans lequel les structures rehaussées (12) comprennent en particulier des entretoises, qui sont réalisées en particulier de manière linéaire, en forme de L, en forme de T ou avec une forme de croix, et dans lequel les entretoises présentent en particulier une largeur (y) de 5 µm à 5 mm, de préférence de 50 µm à 500 µm, et une longueur (x) de 10 µm à 10 mm, de préférence de 100 µm à 1 mm,
dans lequel des cavités (13) situées en particulier entre les structures rehaussées (12) sont carrées, rectangulaires, circulaires ou hexagonales.

4. Ensemble membrane-électrode (10, 20, 30) selon la revendication 2 ou 3, dans lequel un pourcentage en volume de cavités (13), qui sont présentes entre les structures rehaussées (12), par rapport au volume total des cavités (13) et des structures rehaussées (12) va de 10 % à 99 %, de préférence de 12 % à 80 % et de manière davantage préférée de 15 % à 70 %.

5. Ensemble membrane-électrode (10, 20, 30) selon la revendication 1, dans lequel la première couche d'étanchéité (1) et/ou la seconde couche d'étanchéité (2) comprennent un film de support (5', 5") et une structure de renforcement (4) sous la forme d'une couche de renforcement.

6. Ensemble membrane-électrode (10, 20, 30) selon la revendication 5, dans lequel la structure de renforcement (4) comprend une structure tissée et/ou une structure poreuse et/ou une structure perforée, dans lequel la structure de renforcement (4) comprend en particulier des fibres, en particulier des fibres de carbone, un filet métallique, des céramiques poreuses ou des polymères, en particulier choisis parmi le groupe de polyoléfines, de polyesters, de polymères aromatiques, de polymères (per)fluorés, de polysiloxanes ou de mélanges de ceux-ci.

7. Ensemble membrane-électrode (10, 20, 30) selon la revendication 5 ou 6, dans lequel un pourcentage en volume de trous de passage formés dans la couche de renforcement (4) par rapport au volume total de la couche de renforcement (4) va de 10 % à 99 %, de préférence de 12 % à 80 % et de manière davantage préférée de 15 % à 70 %, et/ou
dans lequel une zone intérieure de la couche de renforcement (4) est plus grande qu'une zone intérieure du film de support (5).

8. Ensemble membrane-électrode (10, 20, 30) selon l'une quelconque des revendications précédentes, dans lequel la structure de renforcement (4) présente une température de ramollissement supérieure à 75 °C, de préférence supérieure à 90 °C, de manière davantage préférée supérieure à 105 °C, en particulier de manière préférée supérieure à 120 °C et de manière particulièrement préférée supérieure à 160 °C,
et/ou
dans lequel la première couche d'étanchéité (1) et/ou la seconde couche d'étanchéité (2) chevauchent l'anode (6a) et/ou la cathode (6c) et/ou la membrane (6b) et forme une zone de chevauchement (11), dans lequel le cadre d'étanchéité chevauche en particulier l'anode (6a), la cathode (6c) et la membrane (6b), en particulier à parts égales.

9. Ensemble membrane-électrode (10, 20, 30) selon l'une quelconque des revendications 3 à 8, dans lequel une épaisseur de couche d'une couche adhésive formée par l'adhésif (3) est au moins aussi grande que la somme des hauteurs (h) des structures rehaussées (12) dans la première et la seconde couche d'étanchéité (1, 2) ou est au moins aussi grande que l'épaisseur de couche de la couche de renforcement (4) présente dans la première et la seconde couche d'étanchéité (1, 2).

10. Ensemble membrane-électrode (10, 20, 30) selon l'une quelconque des revendications précédentes, dans lequel une couche adhésive pure formée par l'adhésif (3) est présente entre la première couche d'étanchéité (1) et la seconde couche d'étanchéité (2), et la couche adhésive pure présente une épaisseur de couche inférieure à 30 µm, en particulier inférieure à 20 µm et en particulier inférieure à 10 µm, et/ou
dans lequel l'anode (6a) et la cathode (6c) sont appliquées directement sur la membrane (6b) et forment une membrane revêtue d'un catalyseur, et/ou
comprenant en outre une première couche de diffusion de gaz, qui est disposée sur une surface, opposée à la membrane (6b), de l'anode (6a), et une deuxième couche de diffusion de gaz, qui est disposée sur une face, opposée à la membrane (6b), de la cathode (6c).

11. Pile à combustible, cellule électrolytique, compresseur d'hydrogène électrochimique, batterie à flux redox ou capteur électrochimique comprenant un ensemble membrane-électrode (10, 20, 30) selon l'une quelconque des revendications précédentes.
